# Europäisches Patentamt
# European Patent Office
# Office européen des brevets

(11) Veröffentlichungsnummer: **0 042 649**
**B1**

(12) **EUROPÄISCHE PATENTSCHRIFT**

(45) Veröffentlichungstag der Patentschrift:
29.01.86

(51) Int. Cl.⁴: **G 06 F 15/46**

(21) Anmeldenummer: **81200674.0**

(22) Anmeldetag: **16.06.81**

(54) **Dienstleistungsanordnung mit einer digitalen Programmieranordnung die gegen Störungen durch beliebiges Einschalten des Geräts gesichert ist.**

(30) Priorität: **20.06.80 NL 8003567**

(43) Veröffentlichungstag der Anmeldung:
**30.12.81 Patentblatt 81/52**

(45) Bekanntmachung des Hinweises auf die Patenterteilung:
**29.01.86 Patentblatt 86/5**

(84) Benannte Vertragsstaaten:
**AT BE CH DE FR GB IT LI NL SE**

(56) Entgegenhaltungen:
**FR - A - 2 040 584**
**FR - A - 2 119 340**
**FR - A - 2 414 755**
**US - A - 4 054 911**

**ELECTRONICS, 9. Dezember 1976, Seiten 105-110 B. BELL et al.: "Single-chip microprocessor rules the roast"**

(73) Patentinhaber: **N.V. Philips' Gloeilampenfabrieken, Groenewoudseweg 1, NL-5621 BA Eindhoven (NL)**

(72) Erfinder: **van der Meulen, Andries, c/o INT. OCTROOIBUREAU B.V. Prof. Holstlaan 6, NL-5656 AA Eindhoven (NL)**

(74) Vertreter: **Strijland, Wilfred et al, INTERNATIONAAL OCTROOIBUREAU B.V. Prof. Holstlaan 6, NL-5656 AA Eindhoven (NL)**

## Beschreibung

Die Erfindung betrifft eine Dienstleistungsanordnung für den allgemeinen Gebrauch mit

a) einem Anschluss mit einem lösbaren Kontaktelement für eine elektrische Speisequelle, mit einem Verteilerelement zum Abgreifen einer ersten und einer zweiten Speisespannung an der elektrischen Speisequelle,

b) einer Steuerschaltung mit einem ersten Eingang zum Empfang der ersten Speisespannung, einem zweiten Eingang zum Empfang eines spezifischen Steuersignals und einem ersten Ausgang für ein gesteuertes Einschaltsignal,

c) einem Dienstleistungselement mit einem Eingang zum Empfang des Einschaltsignals,

d) einer digital arbeitenden Programmsteueranordnung mit einem nicht flüchtigen Speicherabschnitt, der an ersten Speicherstellen ein Steuerprogramm für das Dienstleistungselement enthält, und weiter mit einem flüchtigen Speicherabschnitt für variable Daten, einem ersten Eingang zum Empfang der zweiten Speisespannung direkt aus dem genannten Verteilerelement, einem zweiten Eingang für ein Spezifikationssignal für das Dienstleistungselement und einem Ausgang für das spezifische Steuersignal,

e) extern aktivierbaren Mitteln (414, 416, 418) zur Bildung des Spezifikationssignals.

Derartige Dienstleistungsanordnungen haben sich allmählich weiter durchgesetzt. Unter Dienstleistungsanordnung sei ein Gebrauchsgegenstand verstanden, für dessen Bedienung keine besonderen Kenntnisse erforderlich sind; die Anordnung teilt sich gleichsam in zwei: Das Dienstleistungselement, das die eigentliche Gebrauchsfunktion ausübt, und die Steuerung, die bestimmt, auf welche Weise diese Gebrauchsfunktion bewirkt wird. Beispiele derartiger Dienstleistungsanordnungen sind:

– Waschmaschinen mit mehreren Waschprogrammen (die Wahl wird durch Selektiveinstellung und/oder durch Messsignale von Sensoren bestimmter Parameter bestimmt, beispielsweise in Abhängigkeit von der Art und der Menge der Wäsche);

– Geschirrspüler und elektrische/elektronische Öfen: es gelten hierfür entsprechende Situationen;

– Fernsehempfänger mit eingebauten Generatoren für Spiele, Vorwahlanordnungen für bestimmte Sender, für Einstellgrössen und dergleichen;

– Staubsauger deren Saugleistung in Abhängigkeit von einem oder mehreren gemessenen Parametern bestimmt wird;

– Bestrahlungsanordnungen für den Hausgebrauch mit voreinstellbarer Bestrahlungszeit. Das nachstehende Ausführungsbeispiel ist die aus der Sicht des Erfinders beste Ausführungsform.

Eine grosse Unterabteilung der Dienstleistungsanordnung lässt sich also als Haushaltgeräte kennzeichnen. Unter «Insel...» sei verstanden, dass die Dienstleistungsanordnung selbständig arbeiten kann ohne dass sie einer externen Anordnung untergeordnet ist. Sie arbeitet also nicht auf die Art eines Peripheriegeräts, das einem zentralen Rechner untergeordnet ist.

Derartige Anordnungen können grundsätzlich auf zwei Weisen in Betrieb gesetzt werden. Erstens mittels eines Einschalters oder etwas derartiges, wodurch das Programm unter Normalbedingungen gestartet wird. Auf diese Weise arbeiten auch professionelle Geräte wie beispielsweise ein digitaler Rechner und seine Peripheriegeräte (Terminals). Die zweite Art der Inbetriebsetzung ist die Spannungszufuhr zur Anordnung durch Einstecken oder dergleichen des Kontaktelementes in eine Kontaktstelle (z.B. die Wandsteckdose) der Netzspeisequelle. Zumal bei leicht transportablen Anordnungen, die nur verhältnismässig kurze Zeit benutzt werden, wird letzteres oft stattfinden, denn sie können nach dem Gebrauch weggestellt werden. Auch sind derartige Dienstleistungsanordnungen oft nicht mit einem derartigen preiserhöhenden Einschalter ausgerüstet. Diese zweite Art der Inbetriebsetzung ergibt eine besonders unvoraussagbare, längere Zeit anhaltende und prellende Einschalterscheinung in der Speisespannung. Für eine entsprechende Durchführung des Programms ist es erforderlich, dass die Programmsteueranordnung bei einer vorgegebenen Adresse startet. Wie im weiteren beschrieben wird, wird im Ausführungsbeispiel als Programmsteueranordnung ein Mikroprozessor vom Typ TMS 1000 verwendet. Durch besondere Massnahmen kann dabei die Startadresse gebildet werden, und zwar entweder, wenn die Speisespannung innerhalb von 3 ms ein ausreichend hohes Niveau erreicht und nicht mehr niedrig wird (diese Bedingung wird also nicht erfüllt), oder wenn ein spezifischer Spannungsimpuls an einem dazu bestimmten Initialisationseingang erzeugt wird. Für andere Programmsteueranordnungen gelten gleichartige Bedingungen. Eine derartige Programmsteueranordnung enthält im allgemeinen einen Speicherabschnitt mit dem (festen) Programm. Weiter ist ein Speicherraum für variable Daten vorhanden, wie für eine oder mehrere Adressen für den Programmspeicher, Zwischenergebnisse, Parametersignale u.dgl. Diese variablen Daten gehen verloren, wenn die Netzspannung unterbrochen wird.

Ein besonderes Problem bei vielen der erwähnten Haushaltgeräte besteht darin, dass sie einen physikalischen Parameterwert beeinflussen, z.B. eine Motordrehzahl oder eine Temperatur. Wenn ein beliebiger Inhalt des Speichers mit nichtfestem Inhalt entstehen kann, kann die erwähnte Beeinflussung auf unrichtige Weise und/oder an einem unrichtigen Zeitpunkt erfolgen (beispielsweise läuft die Waschmaschine «direkt» oder die Bestrahlungslampe soll eine unzulässig lange Bestrahlungszeit in Betrieb sein).

Darstellung der Erfindung

Der Erfindung liegt die Aufgabe zugrunde, das Erreichen der Startadresse selbsttätig und unabhängig von der Tatsache zu verwirklichen, dass durch kräftige und lange Zeit anhaltende Störsignale auf insbesondere die zweite Speisespannung zunächst eine beliebige Speicheradresse erreicht werden kann, so dass inbesondere kein Operationszustand hinsichtlich der Beeinflussung der erwähnten Parameterwerte erreicht werden kann, welcher Zustand nicht oder nur durch besondere Aktionen oder erst nach Verlauf einer zu langen Zeit verlassen werden kann.

Die Aufgabe wird erfindungsgemäss durch die Merkmale im Kennzeichen des Anspruchs 1 gelöst.

Die Teststelle kann in einer Dauerschleife liegen, das ist häufig eine Schleife, die ohne bestimmte externe Massnahme nicht verlassen werden kann. In bestimmten Fällen werden auch Schleifen, die eine endliche Zeit durchlaufen werden, mit einer Teilroutine zur Prüfung ausgerüstet. So wird in vielen Benutzungsfällen eine Aufenthaltszeit von ½ Sekunde vom Anwender nicht als störend empfunden. Wenn dies jedoch ein Zustand mit brennender Strahlungsquelle ist, wird eine solche Zeit noch viel zu lang sein.

Weitere vorteilhafte Ausführungen sind in den Unteransprüchen genannt. Ein Mehrbitkode bietet den Vorteil, dass es besonders unwahrscheinlich ist, dass der Code beim Einschalten «zufällig» gebildet wird: Beispielsweise wird ein Vierbitcode meistens ungenügenden Schutz bieten. Wenn bei einer solchen Folge eines der Mehrbitelemente «zufällig» beim Einschalten den entsprechenden Wert erhält, wird beim abermaligen Durchlaufen der betreffenden Schleife wieder ein anderes Mehrbitelement der Folge geprüft werden. Bei jedem Durchgang der Schleife wird jetzt jedoch nur ein geringer Teil des Codes geprüft, und dies kostet also nur wenig Zeit. Auf diese Weise erfolgt weiter im Betrieb eine ständige und dennoch einfache Kontrolle auf Störungen (beispielsweise Netzstörungen), die den Inhalt des flüchtigen Speicherabschnittes auf unzulässige Weise beeinflussen könnten. Die Elemente der Reihe können alerhand Werte besitzen. Vorzugsweise haben sie nicht stets den gleichen Wert und vorzugsweise haben nicht alle Bits eines Mehrbitcodeelements den gleichen Wert. Dieser Vorzug braucht jedoch nicht für alle Codeelemente erfüllt zu sein. So kann eine einfache Folge wie folgt aussehen: 010101, 101010.

Unter Programm sei verstanden: Die Gesamtheit fest gespeicherter Information zur Steuerung der Zusammenarbeit zwischen Programmsteueranordnung und Dienstleistungselement, d.h. also einschliesslich der Prüf- und Messfunktionen (sofern vorhanden). Auch wenn das Dienstleistungselement mehrere Programme durchlaufen kann, wie Waschprogramme in einer Waschmaschine, gehören sie alle zum oben erwähnten Maschinenprogramm. Wenn die Programmsteueranordnung bei der Inbetriebsetzung der Dienstleistungsanordnung ausserhalb des Programms gerät, wird rasch der Programmanfang erreicht, insbesondere sobald beim Durchlaufen des nicht flüchtigen Abschnitts des Speichers eine derartige Anzeigeinformation erreicht wird. Wenn der Programmspeicher in Seiten eingeteilt ist, wird zumindest am Ende jeder Seite oder am Ende eines weiter nicht benutzten Teils einer Seite jeweils eine Anzeigeinformation angeordnet.

Die beschriebenen Massnahmen können auf mehrere Weisen verwirklicht werden. Wenn die Kapazität des flüchtigen Speicherabschnitts nicht zum Aufnehmen des Mehrbitcodes ausreicht, muss sie erweitert werden. In anderen Fällen kann man mit dem bereits vorhandenen Speicher auskommen. Stets wird jedoch eine Dienstleistungsanordnung erhalten, die direkt oder nahezu direkt mit der Vorbereitungsroutine anfängt, auch wenn die Inbetriebsetzung der Dienstleistungsanordnung auf äusserst unkontrollierte Weise erfolgen würde.

Beschreibung der Ausführungsbeispiele

Ausführungsbeispiele der Erfindung werden nachstehend an Hand der Zeichnung näher erläutert. Es zeigen

Fig. 1 eine Prinzipblockschaltung einer Dienstleistungsanordnung,

Fig. 2 ein ausgearbeitetes Schaltbild einer Bestrahlungsanordnung,

Fig. 3 ein elementares Flussdiagramm,

Fig. 4 den allgemeinen Zusammenhang der Subroutinen, nach denen die Anordnung nach Fig. 2 arbeitet,

Fig. 5 einen ersten Teil einer Ausarbeitung der Fig. 4,

Fig. 6 einen zweiten Teil der Ausarbeitung der Fig. 4,

Fig. 7 einen dritten Teil der Ausarbeitung der Fig. 4,

Fig. 8 den Inhalt eines Teils des flüchtigen Speichers der Programmieranordnung.

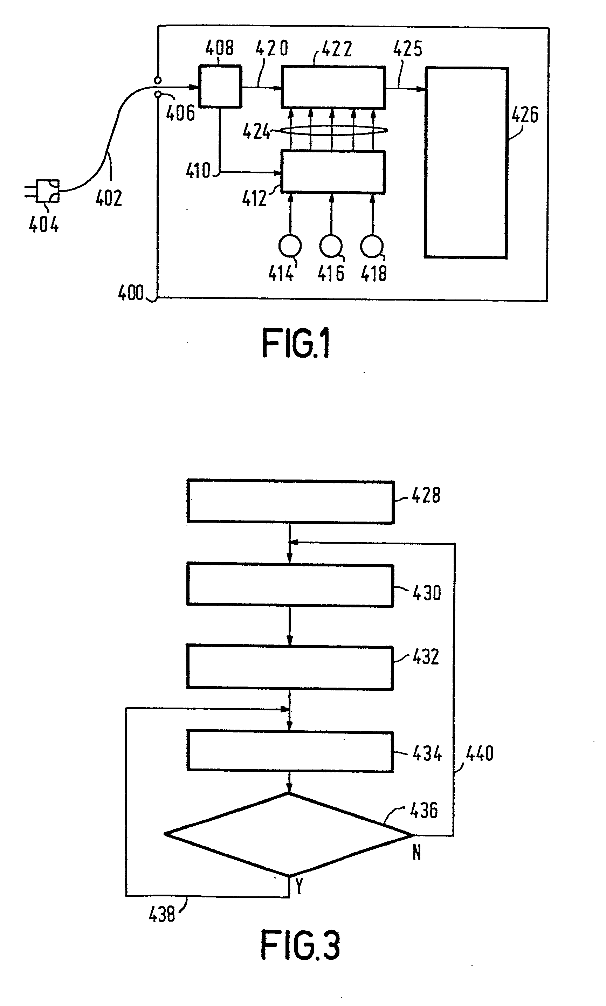

In Fig. 1 ist eine Prinzipblockschaltung einer Dienstleistungsanordnung mit Programmsteueranordnung dargestellt. Das Ganze befindet sich in einem Gehäuse 400 und lässt sich durch Netzkabel 402 und Netzstecker 404 mit dem öffentlichen Elektrizitätsnetz verbinden. Das Kabel 402 führt durch die Öffnung 406 und ist an die Verteilerschaltung (Verteilerelement) 408 angeschlossen, die eine Sicherung, Spannungswandler, einen Netzschalter und dergleichen umfasst. Die Erdung der Einheit ist der Kürze halber nicht angegeben. Über die gegebenenfalls mehrfache Leitung 410 wird die digital arbeitende Programmieranordnung 412 gespeist. Letztgenannte empfängt mittels der Knöpfe 414, 416 und 418 Spezifikationssignale. Sie beziehen sich z.B. auf die Dauer und auf den Anfangszeitpunkt der Bestrahlung. In einer anderen Anwendung können diese Spezifikationssignale sich auch auf eines oder mehrere Parametersignale beziehen; in diesem Fall können die Elemente 414, 416 und 418 auch Sensoren sein, die bei einer Waschmaschine z.B. die Wassertemperatur und/oder den Füllgrad angeben. Diese Sensoren können dann an dem Dienstleistungselement 426 angeschlossen sein. Über die Leitung 420 erhält die Steuerschaltung 422 ebenfalls Speiseleistung. Weiter empfängt die Steuerschaltung auf der hier mehrfach angegebenen Leitung 424 ein spezifisches Steuersignal. In einem einfachen Fall ist die Leitung 424 einfach und betrifft das spezifische Steuersignal nur die zwei Möglichkeiten «ein» und «aus». Auch ist es möglich, dass dieses Steuersignal einen einzigen analogen Wert besitzt, der beispielsweise eine Drehzahl angibt. Im Ausführungsbeispiel bezieht sich das Steuersignal sowohl auf ein Ein/Aus-Signal als auch auf eine Anzahl von Steuersignalen zum Darstellen einer Bestrahlungszeit. Bei einer Waschmaschine können diese Steuersignale die verschiedenen Teilfunktionen des Waschprozesses kontrollieren wie das Erregen des Motors, das Aktivieren der Heizspirale und weiter mehrere Hähne und Ventile. In einem einfachen Fall enthält die Steuerschaltung 422 also einen oder mehrere elektromechanische oder elektronische Schalter. Sie kann jedoch auch mit analog geregelten Elementen ausgerüstet sein, beispielsweise zur Regelung einer Stromstärke.

Auf der Leitung 425 erscheinen die gesteuerten Erregersignale: Diese Leitung kann auch mehrfach ausgeführt sein. Es können also Speisesignale sein (beispielsweise 220 Volt, 50 Hz) oder Impulssignale. Das Element 426 stellt hier die Dienstleistungsfunktion dar, also im Ausführungsbeispiel die Bestrahlungslampe(n) und die Anzeigeelemente für die Bestrahlungszeit. An sich sind alle Funktionen innerhalb des Blocks 426 bekannt.

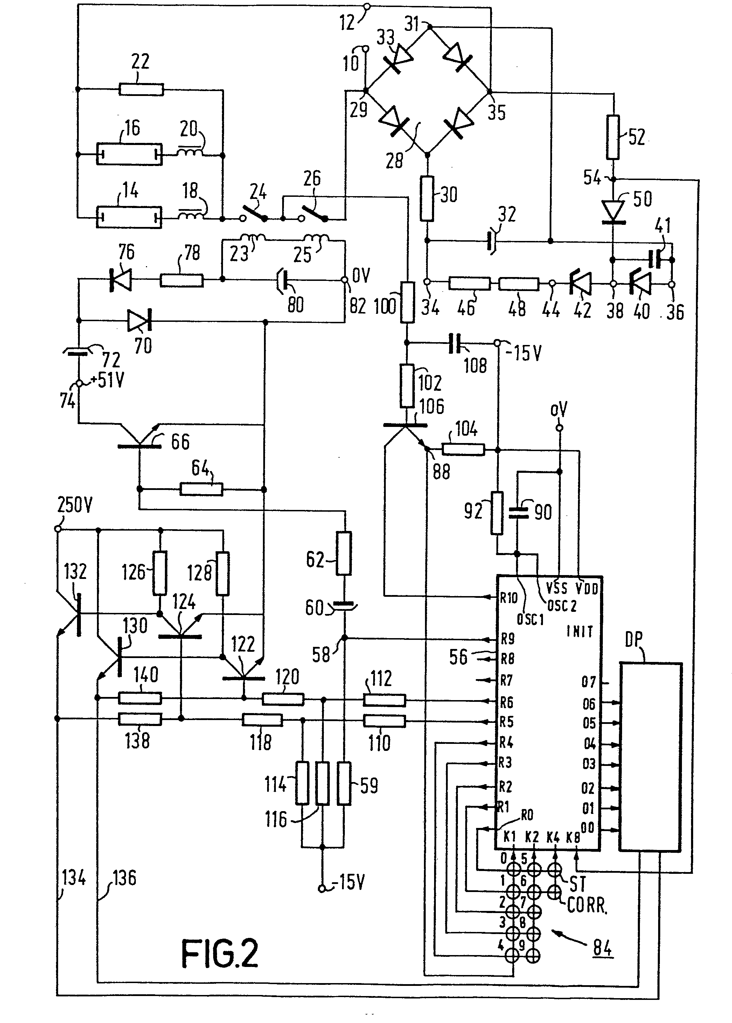

In Fig. 2 ist ein ausgestaltetes Schaltbild einer Bestrahlungsanordnung einschliesslich der Steuerschaltung und Programmierungsanordnung dargestellt. In angeschlossenem Zustand führen die Anschlüsse 10 und 12 Netzspannung, beispielsweise 200 Volt, 50 Hz. Die Schaltung ist doppelt isoliert, die Mittel dazu sind nicht angegeben. Das heisst also, dass die Steuerelemente im übrigen Teil der Schaltung gegen Erde schweben. Weiter gibt es zwei parallel geschaltete Bestrahlungslampen 14 und 16 für Wechselspannung eines an sich bekannten Typs mit je einer damit in Serie geschalteten Glättungsspule 18 bzw. 20. Weiter ist ein Parallelwiderstand 22 von 220 kOhm zur Prüfung der Schalter (ob sie im entsprechenden Zustand offen/geschlossen sind) vorgesehen. Weitere Teile sind der Einfachheit halber fortgelassen. Die Erregung der zwei Lampen erfolgt, wenn beide in Serie geschalteten Schalter 24 und 26 vom Typ LCICE, 24 V, der Herstellung OMRON, geschlossen sind. Weiter enthält die Schaltung einen Gleichspannungsgenerator. Die Anordnung 28 ist ein Brücken-Gleichrichter mit vier Dioden vom Typ BY 179. Mittels des Widerstands 30 (560 Ohm) und des Kondensators 32 (2,5 Mikrofarad) wird eine Glättung erreicht. Zwischen den Anschlüssen 34 und 36 liegt dabei ein Spannungsunterschied von ungefähr 265 V. Die Zenerdiode 40, vom Typ BZX 79 C 15 erzeugt zwischen den Anschlüssen 36 und 38 einen Spannungsunterschied von 15 Volt. Die Zenerdiode 42 vom Typ BZW 87 C 51 erzeugt zwischen den Anschlüssen 38 und 44 einen Spannungsunterschied von 51 Volt. Die Widerstände 46 und 48 haben je einen Wert von 4700 Ohm. Der Anschluss 38 ist über die Diode 50 vom Typ BZW 72 und den Widerstand 52 von 150 kOhm mit dem Anschluss 12 verbunden und definiert auf diese Weise einen Spannungspegel von etwa 0 Volt. Dies hat in der folgenden Beschreibung die Bedeutung einer logischen «1». Der Spannungspegel am Anschluss 36 beträgt damit etwa − 15 Volt, was in der folgenden Beschreibung die Bedeutung einer logischen «0» hat. Die Anschlüsse 35, 36, 38 und 44 sind durch nicht gezeichnete Verbindungen mit weiteren Schaltungsteilen verbunden. Der Verbindungspunkt zwischen der Diode 50 und dem Widerstand 52 ist mit dem Eingang K8 der Programmsteuereinheit 56 verbunden.

Die Programmsteuereinheit 56 ist ein Mikroprozessor vom Typ TMS 1000 (Texas Instruments). Dieser Mikroprozessor besitzt u. a. eine nicht dargestellte logische Anordnung, die zum Erregen einer Ziffernanzeigeanordnung DP verwendet werden kann, weitere Anschlüsse zum Abfragen eines (einfachen) Tastenfeldes und zum Auslesen der erhaltenen Daten und eine Anzahl von Steuerverbindungen zum Durchführen weiterer Funktionen. Zunächst wird der Erregungsvorgang für die Schalter 24 und 26 beschrieben. Der Anschluss 74 ist an die Spannung von + 51 Volt (Anschluss 44) angeschlossen. Im Ruhezustand ist der Transistor 66 (BC 639) gesperrt und führt der Kondensator 72 (47 Mikrofarad) nahezu die volle Spannung von + 51 Volt. Der Anschluss 82 führt ein Potential von 0 Volt (Anschluss 38), und die Spulen 23 und 25 sind nicht erregt. Über den Widerstand 64 (2200 Ohm) führt die Basiselektrode des Transistors 66 0 Volt. Im Betrieb (siehe weiter unten) erzeugt der Mikroprozessor 56 ständig impulsförmige Signale mit einer Impulsbreite von 1 ms und einer Frequenz von 50 Hz. Sie erscheinen am Ausgang R9 und gelangen über den Koppelkondensator 69 (2,2 Mikrofarad) und den Widerstand 62 (5600 Ohm) zur Basiselektrode des Transistors 66. Die Leitung 58 ist auch über den Widerstand 59 (10 kOhm) mit einem Potential von − 15 Volt verbunden (Element 56 ist ein PMOS-Mikroprozessor mit offenen Ausgängen). Unter der Steuerung des erwähnten impulsförmigen Signals wird der Transistor 66 leitend und entlädt sich der Kondensator 72. Diese Situation macht die Diode 76 (Typ BAW 62) leitend, so dass über den Widerstand 78 (39 Ohm) sich der Kondensator 80 (Kapazität 22 Mikrofarad) mit aus einem Kondensator 72 bezogener Ladung auflädt. Am Ende des Impulses auf der Leitung 58 sperrt der Transistor 66 und wird der Kondensator 72 nachgeladen. Die oberste Elektrode (an der Seite der Diode 76) des Kondensators 72 kann infolge der Diode 70 (Typ BAW 62) kein positives Potential erhalten. Auch die Diode 76 ist am Ende des Impulses auf der Leitung 58 wieder undurchlässig. Die Ladung am Kondensator 80 fliesst über die Spulen 23 und 25 mit einer RC-Zeitkonstante von mehreren zehn Millisekunden ab. Ausserdem öffnen sich die Schalter 24 und 26 erst, wenn die Spannung an den Spulen auf einen niedrigen Wert (4 Volt) gegen die Nennspannung absinkt. So darf eine Anzahl von Impulsen auf der Leitung 58 (in der Grössenordnung von 10) unterbleiben: Erst dann öffnen sich die Schalter 24 und 26. Ein Impuls kann dadurch ausbleiben, dass das regelmässige Weiterlaufen der Arbeitszyklen in der Programmiereinheit 56 stockt. Wie weiter unten beschrieben wird, ist dieser Fortgang mit dem Rückstellen der noch zu vergehenden Arbeitszeit gekoppelt, so dass damit die Bestrahlung schnell beendet wird.

Anschliessend wird die Schaltung hinsichtlich des Tastenfelds beschrieben. Das Tastenfeld 84 enthält zehn Zifferntasten 0 bis 9 zum Zuführen einer Wirkungsdauerinformation, eine Taste ST zum Zuführen eines Startsignals und eine Taste CORR zum Stornieren einer falsch betätigten Taste. Es sei noch angenommen, dass immer höchstens eine Taste zu einer bestimmten Zeit gedrückt wird. In einer bestimmten Programmphase der Anordnung 56 (siehe weiter unten) werden die Ausgangsanschlüsse RO ... R4 aufeinanderfolgend für ein Abfragesignal erregt. Wenn beispielsweise die Taste 7 gedrückt ist und der Anschluss R2 erregt wird, wird dies zum Eingangsanschluss K2 weitergeleitet. Die Erregung der Anschlüsse R0, R1, R3 und R4 ergibt dabei keine Weiterleitung. Durch Decodieren ist die gedrückte Taste dann beim Mikroprozessor bekannt. Der Anschluss K1 empfängt noch ein Signal vom Punkt 88 und der Anschluss K8 eines von der Korrekturtaste CORR. Die weitere Steuerung und Speisung des Mikroprozessors haben folgenden Verlauf. Die Anschlüsse OSC1 und OSC2 sind miteinander verbunden. Der Anschluss VSS ist mit einem Spannungspegel von 0 Volt (Substrat) verbunden. VDD ist mit einem Spannungspegel von − 15 Volt verbunden (Speisespannung). Zwischen den Anschlüssen OSC1/2 einerseits und dem Anschluss VSS andererseits sind ein Kondensator 90 von 47 pF und ein Widerstand 92 von 47 kOhm geschaltet. Diese beiden Teile bestimmen den Taktimpulszyklus des Mikroprozessors nach Angabe des Herstellers auf einen Wert von etwa 300 kHz.

Nachstehend wird die Schaltung zur Detektion des möglichen geschlossenen Zustands eines der Schalter 24 und 26 ausserhalb der Betriebszeit der Bestrahlungslampen 14 und 16 beschrieben. Die Mittel dazu sind: Widerstände 100, 102 (330 kOhm), 104 (39 kOhm), weiter der Transistor 106 vom Typ BC 546 und der Kondensator 108 (0,22 mF). Angenommen, der Schalter 24 sei offen und der Schalter 26 geschlossen. Dabei ist das Potential des Punkts 29 bestimmend, das im Mittel höher als das des Punkts 31 ist. Es kann momentan nie mehr als etwa 1 Volt niedriger dadurch sein, dass dann die Diode 33 leitend wird. Zum anderen kann es momentan höher sein als das Potential des Punkts 31 in Abhängigkeit von der Phase der speisenden Wechselspannung. Dadurch lädt sich der Kondensator 108 mit einer RC-Zeitkonstante von etwa 0,07 s. auf. Wenn der Anschluss R10 des Mikroprozessors 56 von einem Signal «1» (etwa 0 Volt) angesteuert wird, leitet der Transistor 106, so dass auch der Punkt 88 ein Potential von logisch «1» annimmt. Dieses letzte Signal wird dabei am Anschluss K1 des Mikroprozessors 56 detektiert. Wenn in der beschriebenen Situation beide Schalter offen sind (24, 26), beträgt das Signal am Punkt 88 dagegen etwa − 15 Volt über den Widerstand 104, wodurch ständig eine logische «0» signalisiert wird. In diesem Zusammenhang sei bemerkt, dass die Toleranzen in bezug auf den Wert − 15 Volt ziemlich gross sind: Ein Unterschied von einigen Volt gibt immer noch den logischen Wert «0». Gegen den Wert 0 Volt darf die Abweichung nur wenige zehntel Volt betragen. Die Auswertung des Zwischengebiets (z.B. zwischen − ½ und − 10 Volt) ist nicht gewährleistet. Wenn andererseits der Schalter 24 geschlossen und der Schalter 26 geöffnet ist, ist das Potential des Punkts 35 bestimmend. Dieser Punkt ist über eine gleiche Diode mit dem Punkt 31 verbunden und hat also ein höheres Potential als der Anschluss 36. Hinsichtlich des leitenden Zustands des Transistors 106 gilt, was bereits oben gesagt ist: Auch dabei empfängt der Anschluss K1 eine logische «1». Wenn die beiden Schalter 24 und 26 geschlossen sind, ist, abgesehen von anderen Vorgängen, die Bestrahlungsröhre erregt. Wenn in der Wirkungszeit die beiden Schalter defekt werden, so dass sie nicht mehr unterbrechen können, hat die Sicherung versagt. Die Möglichkeit eines derartigen doppelten Defekts ist besonders klein und vernachlässigbar.

Nachstehend folgt die Beschreibung der Anzeigeschaltung. Hierzu ist der Mikroprozessor 56 mit zwei Wählausgängen R5 und R6 ausgerüstet. Weiter sind 7 Codesignalausgänge 00 ... 06 vorgesehen, die über eine innere logische Anordnung zum Erregen einer Siebensegment-Anzeigeanordnung angesteuert werden. Diese Anordnung ist der Kürze halber als Block DP angegeben. Die Wählausgänge R5 und R6 sind über die Widerstände 110, 112 (27 kOhm) und 114, 116, 118, 120 (alle 33 kOhm) mit einem Potential von − 15 Volt und den Basiselektroden der Transistoren 122, 124 (vom Typ BF 422) verbunden. Ihre Emitterelektroden sind an den Punkt 82 (Potential 0 Volt) angeschlossen. Ihre Kollektorelektroden sind über Widerstände 126 und 128 (Wert 33 kOhm) mit einem Speisepotential von 250 Volt (Anschluss 34) verbunden. Letzteres eignet sich zum Ansteuern der eigentlichen Anzeigeelemente. Wenn die Anschlüsse R5 und R6 ein niedriges Potential besitzen, werden die Transistoren 122 und 124 von der Speisespannung von − 15 Volt so gesteuert, dass ihre Kollektorelektroden ein niedriges Potential führen. Dadurch sperren die Transistoren 130 und 132 und werden die Leitungen 134 und 136 über die Widerstände 138 und 140 (Wert 681 kOhm) auf einem niedrigen Potential gehalten: Die Anzeigeelemente stehen dabei im nicht selektierten Zustand. Wenn die Transistoren 122 und 124 von einem hohen Signal an den Anschlüssen R4 und R5 (etwa 0 Volt) leitend gemacht werden, bringt das hohe Potential ihrer Kollektorelektrode auch den entsprechenden Transistor 130 oder 132 (vom Typ BF 422) in die Sättigung und wird die betreffende Leitung 134 oder 136 auf einem hohen Potential angesteuert; auf dieser Leitung wird die Anzeigeleistung den Anzeigeelementen zugeführt.

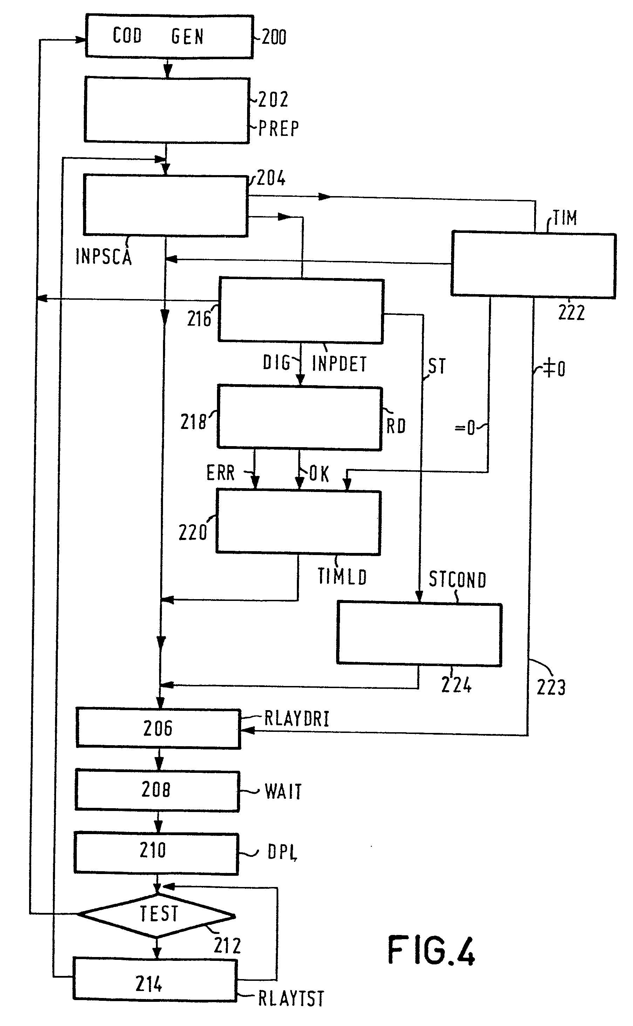

In Fig. 3 ist ein elementares Flussdiagramm der Organisation der Anordnung nach dem Ausführungsbeispiel dargestellt. Dieses Flussdiagramm umfasst zunächst den Block 432: Die Vorbereitungsroutine, deren spezifische Teilfunktionen weiter unten beschrieben werden. Weiter enthält der Block 434 die übrigen oder «Arbeits»-Routinen, die ebenfalls weiter unten beschrieben werden. Letztere bestehen aus einer Vielzahl verschiedener Teilroutinen, die wiederholt dadurch durchlaufen werden, dass das Programm eine Schleifenstruktur besitzt. Das Ausführungsbeispiel besitzt nur eine derartige Schleife, wobei das Umlaufen ständig weitergeht, solange die Speisespannung vorhanden ist. In einer anderen Ausführung könnte es zwei verschiedene Schleifen geben: eine Schleife die ständig durchlaufen wird, wenn die Strahlungsquellen eingeschaltet sind, und eine zweite Schleife, die ständig durchlaufen wird, wenn die Strahlungsquellen eingeschaltet sind, und eine zweite Schleife, die ständig durchlaufen wird, wenn die Strahlungsquellen abgeschaltet sind. Symbolmässig ist die Gesamtheit der Arbeitsroutinen hier als ein einziger Block 434 angegeben. In einer Dauerschleife im Arbeitsroutinenvorrat und beispielsweise am Ende einer derartigen Schleife wird geprüft, ob ein näher zu spezifizierender Teil des Schreib/Lese-Speichers des Mikroprozessors einen vorgegebenen 16- Wort-Code enthält. Diese Prüfung wird mit der Raute 436 symbolisiert: Code O.K.? Ist die Antwort «ja» (Y), darf das Programm nach einer folgenden Arbeitsroutine über den Weg 438 weitergehen. Nach einer entsprechenden Initialisierung wird dies so sein. Dabei kann die Wirkung der Bestrahlung beendet sein, bzw. noch nicht angefangen haben: Dabei laufen sog. Warteroutinen ab. Derartige Warteroutinen sind, wie näher erläutert wird, in die gleiche Schleife aufgenommen. Zum anderen kann die Durchführung des Programms dadurch beendet werden, dass der Netzschalter in den Auszustand gebracht bzw. der Stecker (404) aus der Steckdose gezogen wird. Wenn dagegen in obiger Beschreibung der Code falsch ist, geht das Programm über den Weg 440 zum Block 430. Im Block 430 wird an einer Anzahl näher zu spezifizierender Speicherstellen im Schreib/Lese-Speicher des Mikroprozessors TMS 1000 der später zu prüfende Code eingeschrieben. Die Möglichkeit, dass dieser Code zufällig gebildet wird, kann durch die Wahl eines hinlänglich erweiterten Codes vernachlässigbar klein gemacht werden. Nach der Erzeugung des Codes im Block 430 geht das Programm wieder zur Vorbereitungsroutine zurück. Wenn der Code einmal gebildet ist, wird also stets die Schleife 434/438 durchlaufen, sei es mit wechselnden Exemplaren des Arbeitsroutinevorrats.

Bei der Inbetriebsetzung der Anordnung durch Einstecken des Netzsteckers kann die Programmsteueranordnung in einer beliebigen Stellung ih- res Adresszählers für den Festwertprogramm- speicher gebracht werden. Durch den dargestellten Aufbau des Steuerprogramms führt jede darin auftretende Speicheradresse zum schnellen Eintreten (über den Block 436) in die Vorbereitungsroutine. Es ist möglich, dass noch unbenutzte Stellen im Programmspeicher vorhanden sind. Hierfür sind mehrere Lösungen möglich. Die einfachste davon ist, dass alle diese Programmstellen einen leeren Code enthalten: Dabei muss der Adresszähler alle Adressen durchlaufen, bis der erste nicht leere Befehl erreicht wird: Vorzugsweise ist er gerade der erste Befehl des Blocks 430: Die Bildung des Codes im flüchtigen Abschnitt des Speichers. Unter Umständen kann das Durchlaufen dieser Adressen längere Zeit dauern. Es ist auch möglich, dass der Programmspeicher in Seiten eingeteilt ist, wodurch der Adresszähler ständig die Speicherstellen einer gleichen Seite ablaufen würde: Bei einer völlig leeren Seite würde dann ein festgelaufener Zustand entstehen. Deshalb ist es vorteilhaft, wenn durch den Inhalt einer Anzahl unbenutzter Speicherstellen (zumindest eine je völlig leere Seite) oder sogar aller unbe- nutzten Speicherstellen im Programmspeicher so- fort die erste Adresse des Blocks 430 angewiesen wird, was von der Figur symbolisiert wird (Block 428, der die unbenutzten Speicherstellen angibt). Im Prinzip können die unbenutzten Speicherstellen jede andere Adresse der Blöcke 430, 432, 434 und 436 anzeigen, aber eine solche nichtdirekte Anzeige des Anfangs des Blocks 430 ist weniger schnell.

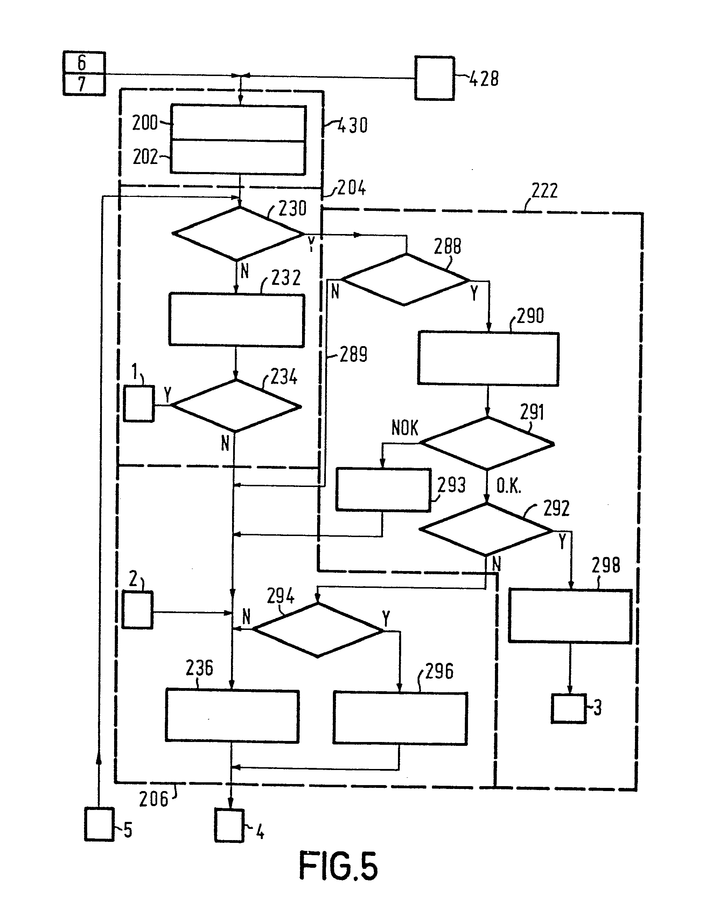

In Fig. 4 ist schematisch der Zusammenhang zwischen den Subroutinen des Flussdiagramms dargestellt, nach dem die Anordnung nach Fig. 2 arbeitet; das Schema wird später an Hand der Fig. 5 bis 8 feiner ausgearbeitet. Das Flussdiagramm fängt mit dem Block 200 an: Hierin wird ein Code erzeugt, der aus 16 Wörtern von je vier Bits besteht, der in den Schreib/Lese-Speicher des Mikroprozessors TMS 1000 gespeichert wird. Die erste Adresse des Blocks 200 wird durch alle Adressen angezeigt, die in Fig. 3, Block 428, symbolisiert sind. Vom Block 200 wird der Block 202 erreicht: Dieser arbeitet als Vorbereitung für das eigentliche Programm: Die Arbeitsroutinen. Die Blöcke 200 und 202 arbeiten also mit dem Block 430 in Fig. 3 zusammen. Von dort geht ein Weg nach 204: Die Abtastroutine der Eingangssignale. Von da gehen Wege nach 206: Relais-Erregungsroutine, nach 216: Detektionsroutine der Eingangsinformation, und nach 222: Die Routine des Zeitanzeigers (oder Notizanordnung). Von 206 geht ein Weg nach 208: Wartezeitroutine. Von 208 gibt es einen Weg nach 210: Anzeigeroutine. Von 210 geht ein Weg nach 212: Prüfroutine des Codes (nur ein Wort der 16 Codewörter wird geprüft). Von dort geht also ein Weg zum Block 200. Vom Block 212 geht ein anderer Weg nach Block 214: Die Zustandsdetektierung der Schalter. Vom Block 214 geht ein erster Weg zum Block 212 zurück: Schalter unsicher, und so arbeitet die Schleife 212–214 als Endschleife. Vom Block 214 geht ein zweiter Weg nach 204 zurück (siehe oben). Von 216 geht ein Weg nach 218: Einleseroutine, und einer nach 224: Routine der Startbedingung. Von 218 geht ein Weg nach 220: Leseroutine für den Zeitanzeiger. Von 220 geht ein Weg nach 206. Von 222 geht ein Weg nach 206, einer nach 220, und ein zweiter Weg 223 nach 206. Von 224 geht ein Weg nach 206. Die Vorgänge werden an Hand der Fig. 5, 6 und 7 näher erläutert.

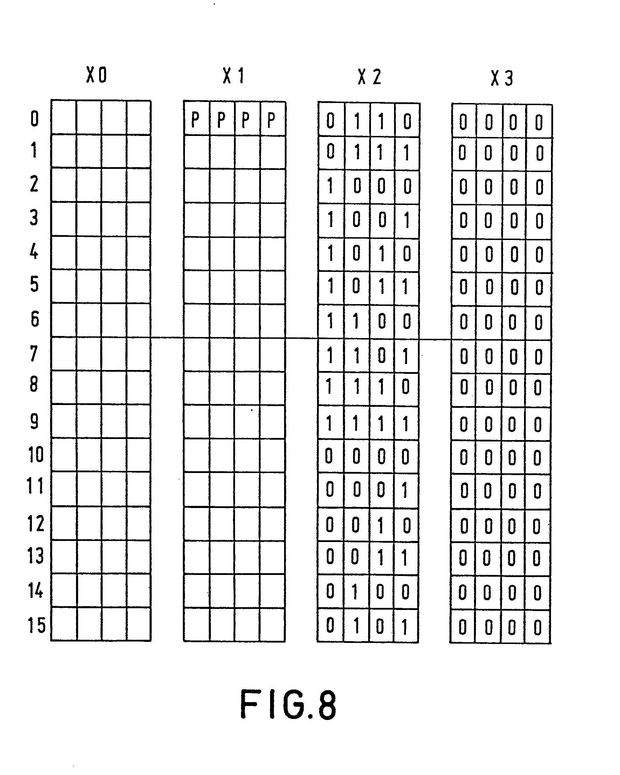

In Fig. 8 ist der Inhalt des Schreib/Lese-Speichers des Mikroprozessors 56 nach Fig. 1 veranschaulicht. Die Kapazität beträgt 4 Bänke von je 16 Wörtern von je 4 Bits. Die Bankadressen liefert das sogenannte X-Register, und das sogenannte Y-Register liefert die Wortadressen. In der Bank 0 enthalten die Wörter Y6 ... Y11 die noch zu vergehende Zeit hintereinander: Die Anzahl Zehner Minuten, die Anzahl Minuten darüber, die Anzahl Zehner Sekunden darüber, die Anzahl Sekunden darüber, die Anzahl 1/5 Sekunden darüber und schliesslich die Anzahl Fünfzigstel Sekunden darüber. Das Wort Y9 ist das Startwort und enthält das Startbit (für den Zeitanzeiger), 0, 0, und das Freigabebit zum Starten. Das Wort Y10 enthält nacheinander x (don't care), das «erstmals»-Bit, das «50 Hz Block»-Bit und x. Das Wort Y11 enthält nacheinander das Rettungsbit für die Zeitnotizanordnung, x, x, das «Wartezeit vorüber»-Bit und das Anzeigeaustastbit (blanking). Das Wort Y12 enthält das Abtastbit für die Ausgangsinformation, x, x, x. Das Wort Y13 enthält drei Bits, die als Zähler gegen Tastkontaktprellen arbeiten, und das Eingangssperrbit. Das Wort Y0 enthält die Information des letzten R-Ausgangssignals beim Abtasten der Eingangsinformation. In der Bank X1 befinden sich die Wörter Y5 und Y6 Zeiteinstellinformation in Minuten bzw. Zehner Minuten auf die Art der Wörter Y5 und Y6 in der Bank X0. Das Wort Y0 enthält eine Anzeigeinformation pppp (Zeiger) zum Prüfen von jeweils einem Codewort parallel, das in der Bank X3 geschrieben ist. Die Bank X2 enthält 16 Codewörter zur Prüfung, ob die Vorbereitungsroutine auf entsprechende Weise durchgeführt wurde. Das Wort Y0 enthält die Information «6», das Wort Y1 die Information «7» usw.: Insbesondere ist der Wortinhalt ungleich der Wortadresse. In dieser Ausführung wird die Bank X3 nicht benutzt.

In Fig. 5 ist ein erster Teil einer Detaillierung des Schemas nach Fig. 4 dargestellt. Wenn die Spannung zwischen Vdd und Vss gross genug geworden ist, wird der interne Taktgeber gestartet. Für die entsprechende Durchführung des Programms wird ein Sprung zur Vorbereitungsroutine im Block 202 benötigt. Es gibt zwei Weisen zur Durchführung dieses Sprungs:

1. Der erste Befehl, der durchgeführt wird, gehört nicht zum eigentlichen Programm. Alle diese Befehle (428) steuern einen Adresssprung zur ersten Adresse der Teilroutine 200;

2. Der erste durchgeführte Befehl gehört tatsächlich zum eigentlichen Programm: Beim Passieren des Blocks 212 (Fig. 4) wird geprüft, ob die Vorbereitungsroutine zuvor bereits durchgeführt wurde. Wenn das Ergebnis der Prüfung negativ ist, wird wiederum ein Sprung (Eingang «6») zur ersten Adresse des Blocks 200 ausgeführt, also wird der 64-Bit-Code für die Speicherbank X2 erzeugt (Fig. 8). Es ist dieser Code, von dem jeweils ein Wort in der erwähnten Prüfung untersucht wird. Danach werden im Block 202 folgende unbedingte Operationen durchgeführt:

1. Die Register der Mikroprozessoren werden zurückgestellt;

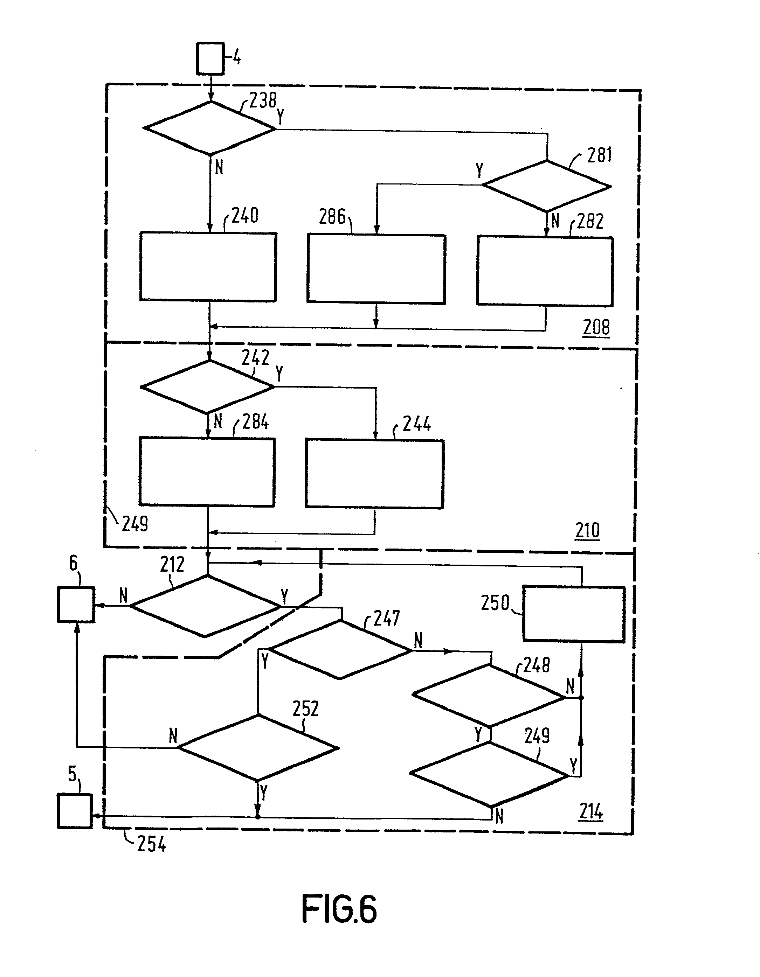

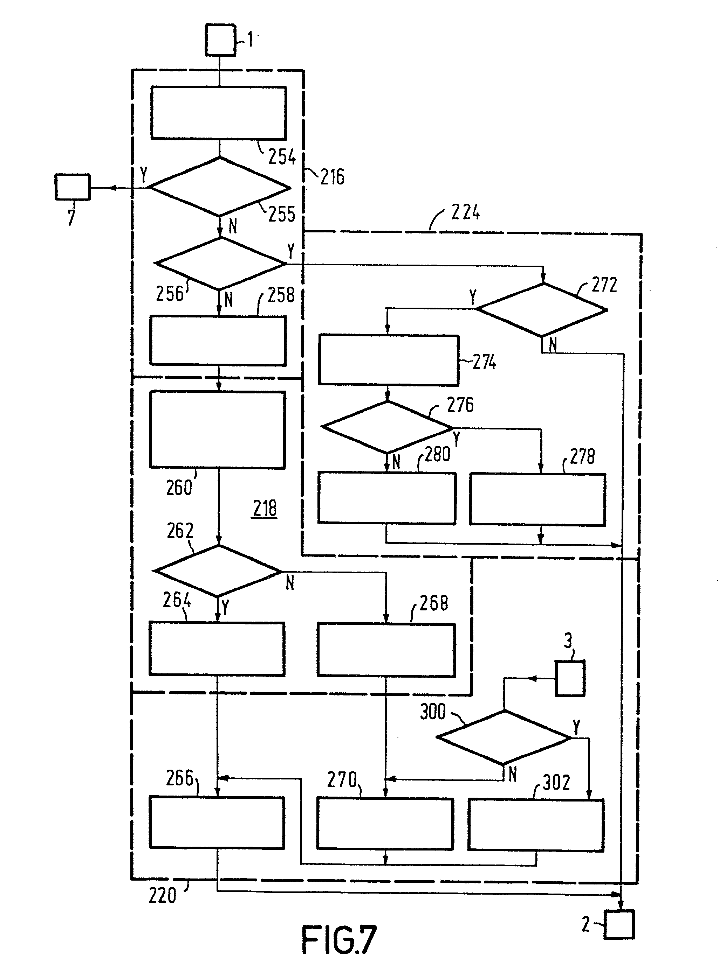

2. die Zeitanzeige (die sich im Minutenabschnitt der Notizanordnung befindet, siehe weiter unten) ist dabei «00», aber an der Anzeigeanordnung wird diese Information als zwei Striche an den mittleren horizontalen Segmenten angezeigt: So steht «nichts» da. Dies geschieht dadurch, dass das Austastbit für die Anzeigeanordnung (Wort Y11) gleich «1» gemacht wird — der eigentliche 4-Bit-Code für die Anzeigeelemente ist dann «1111». Über die Ausgangsanordnung des Mikroprozessors 56 wird dies in den 8-Bit-Code 01000000 übersetzt. Der Block 202 hat einen einzigen Ausgang zum Block 204: Die Abtastroutine der Eingangssignale. Im Block 230 wird geprüft, ob das Startbit (Wort Y9) des Zeitgebers gesetzt und die positive Phase der 50 Hz Netzspannung vorhanden ist. Zunächst werden diese beiden, von einer UND-Funktion zu kombinierenden Bedingungen nicht erfüllt (insbesondere ist das Startbit = 0). Im Block 232 werden die Tasteneingänge des Tastenfelds 84 in Fig. 2 durch Abfragen der Ausgänge R0 ... R4 des Mikroprozessors abgetastet. Die erhaltene Information wird in das Akkumulatorregister des Mikroprozessors 56 gespeichert. Im Block 234 wird detektiert, ob eine Taste gedrückt ist, d.h. ob der Inhalt des Akkumulatorregisters ungleich Null ist. Zunächst ist keine Taste gedrückt (Ergebnis der Prüfung: negativ). In diesem Fall folgt ein Übergang zum Block 206: Die Relaiserregungsroutine. Im Block 236 wird der Ausgang R9 des Mikroprozessors 56 logisch «0» gemacht. Zunächst ist dies eine leere Operation, weil diese Information bereits den Wert «0» hatte. Dann folgt ein Übergang zum Block 208 in Fig. 6: Die Wartezeitroutine: Die Wartezeit ist die Zeit, die zwischen dem Betätigen der Starttaste und der faktischen Einschaltung der Strahlungsquelle vergeht. Im Block 238 wird geprüft, ob das Startbit gesetzt ist (vergleiche weiter Block 230). Zunächst wird dies nicht der Fall sein. Im Block 240 wird der Sekundenabschnitt (Wort Y3) des Registers des Zeitanzeigers mit der Information gefüllt: 15 Sekunden. Dies ist der Wert (1111) der Wartezeit. Ausserdem wird ein weiterer Teil (Wort Y4) des Registers des Zeitanzeigers mit der Information gefüllt: 60 Sekunden (0110): Dadurch wird die am Register eingestellte Bestrahlungszeit um 1 Minute zu lang. Dies bietet den Vorteil, dass die Stellung 0 Minuten, 60 Sekunden dazu benutzt werden kann, das Ende der Bestrahlungszeit zu detektieren. Es folgt darauf der Übergang zum Block 210: Die Anzeigeroutine. Im Block 242 wird zunächst geprüft, ob das Austastbit für die Anzeigeanordnung auf 1 eingestellt ist. Dieses Bit steuert das Blinken der Anzeige in der Wartezeit. Zunächst ist dieses Bit Y5 (im Wort Y11) nicht auf 1 gesetzt. Im Block 284 gelangt über eine Multiplexorganisation in zwei Schritten die Information des Minutenregisters des Zeitanzeigers zur Anzeigeanordnung. Zunächst hat dies (siehe Block 202, oben) die Anzeige der mittleren zwei horizontalen Elemente der Anzeigeanordnung zur Folge. Der Multiplexvorgang wird vom ersten Bit des Wortes Y12 gesteuert. Wenn das Austastbit tatsächlich den Wert «1» hat (dies geschieht im Warten abwechselnd für eine Sekunde und die nächste Sekunde nicht), wird im Block 244 die Anzeige unterdrückt. Die Nachleuchtdauer der Anzeigeelemente ist viel kürzer als 1 Sekunde, so dass dabei die Anzeige blinkt. Es folgt darauf der Übergang zum Block 212: Dabei wird geprüft, ob eines der Wörter des 16-Wortcodes in der Speicherbank X2 entsprechenden Wert besitzt. Die Wahl des betreffenden Worts erfolgt durch den Anzeiger (Wort Y0, Bank X1), dessen Inhalt für die Prüfung um 1 inkrementiert wird. Wenn das Codewort nicht richtig ist, folgt über den Ausgang 6 ein Adresssprung zum Block 200 in Fig. 5. Ist das Codewort richtig, wird im Block 247 geprüft, ob das Startbit gesetzt ist (vgl. Block 238). Wenn das Startbit nicht auf «1» eingestellt ist (dies wird also anfänglich der Fall sein), wird im Block 248 geprüft, ob die Schalter «sicher» (über Ausgang R10 und Eingang K1), also beide offen sind (die Möglichkeit, dass sie beide geschlossen sind, wird vernachlässigt). Normalerweise sind die Schalter sicher und folgt ein Übergang zum Block 249. Sind jedoch die Schalter unsicher, wird im Block 250 die Anzeige verdunkelt. Dies wird durch den Vierbit-Code «1110» bewirkt: Unter seiner Steuerung erzeugt die programmierte logische Anordnung an ihrem Eingang die Information 0000–0000. Über die Blöcke 212, 247, 248 und 250 ist dann eine Dauerschleife gebildet. Sie wird durchlaufen, solange der Fehler in den Schaltern vorhanden ist. Wenn die Schalter sicher (247) sind, wird im Block 249 das Sicherheitsbit geprüft. Es ist logisch «1», wenn die Register der Zeitanzeige nicht auf entsprechende Weise anzeigen. In einem unsicheren Zustand wird eine Schleife über die Blöcke 212, 247, 248, 249 und 250 gebildet. Die so beschriebene Schleife (die Blöcke 204, 206, 208, 210, 212) kann beliebig oft durchlaufen werden und bildet so eine Initialwarteschleife. Wenn eine Taste gedrückt wird, geht das Programm vom Block 234 zum Block 216 (Fig. 7): Die Detektionsroutine für die Eingangsinformation. Im Block 254 wird detektiert, welche Taste gedrückt wurde und wird weiter das vierte Bit des Worts Y13 (Bank X0) gleich «0» gemacht. Wenn beim Durchlaufen der Schleife die gleiche Taste nochmals detektiert wird, wird der Saldo der ersten drei Bits des Worts Y13 um eine Einheit inkrementiert. Wenn eine Überlaufbedingung entsteht, ist es eine echte Taste, die verarbeitet werden darf. Wenn beim Durchlaufen der Schleife keine oder eine andere Taste detektiert wird, wird Y13 auf Null zurückgestellt. So stört das Prellen der Tasten nicht. Wenn die Taste verarbeitet ist, wird das vierte Bit des Worts auf «1» eingestellt, um eine zweite Verarbeitung abzublocken. Im Block 255 wird detektiert, ob es sich um die Korrekturtaste (CORR) handelt. Wenn dies so ist, geht das Programm zum Block 200 zurück. Implizit arbeitet so die Korrekturtaste als Rückstelltaste, auch für das ganze Programm. Anders wird anschliessend geprüft im Block 256, ob die Starttaste (ST) betätigt wurde. Wenn dies nicht so ist, wird im Block 258 die Zifferntaste decodiert und erfolgt ein Übergang zum Block 218: Die Leseroutine. Zunächst wird dabei im Block 260 die eingetastete Ziffer in die Speicherbank X1, Wort Y5 eingeschrieben. Die erste Taste gilt als die der höchsten Ziffernwertigkeit. Im Block 262 wird geprüft, ob die Taste zulässig ist. Die erste ist immer zulässig, die «0» gibt wiederum die Anzeige «nichts». Weiter wird im Block 260 noch das Wiederholungsbit (im Wort Y10, zweites Bit) in der Stellung «Wiederholung möglich», d.h. «0» eingestellt. Wenn eine Taste mit zulässigem Ziffernwert betätigt wurde, wird anschliessend im Block 264 das Freigabebit zum Starten gleich «1» gemacht. Danach erfolgt ein Übergang zum Block 220: Laderoutine für den Zeitanzeiger. Im Block 266 wird dann ausschliesslich die eingetastete Ziffer im Register (Minutenabschnitt) des Zeitanzeigers geschrieben: Bank X0, Wort Y5 des Speichers. Dabei erfolgt ein Übergang zum Block 206 in Fig. 5. Der folgende Übergang nach Fig. 7 erfolgt für jedes Drücken nur einmal. Solange die Taste nicht freigegeben wird und eine weitere Taste (es kann die gleiche Taste sein) wieder gedrückt wird, wird danach jeweils die bereits erwähnte Hauptschleife der Blöcke 204–206–208–210–212 durchlaufen. Dabei wird die erste gedrückte Taste an der Stelle niedrigster Wertigkeit angezeigt. Wenn eine zweite Zifferntaste gedrückt wird, geschieht dasselbe wie beim Drücken der ersten: Die zweite Ziffer erhält die geringste Wertigkeit, während die zuerst gedrückte Ziffer auf die Stelle höherer Wertigkeit übertragen (Wortstelle Y6) und entsprechend angezeigt wird. Im Block 262 wird geprüft, auf entsprechende Bedienung: Sie ist in Ordnung, wenn höchstens zwei Zifferntasten nacheinander gedrückt werden (eine jedoch reicht bereits aus). Wenn der Wert der eingestellten Bestrahlungszeit länger als 40 Minuten ist, wird im Block 268 das Freigabebit zum Starten auf Null zurückgestellt und wiederum die Information «nichts» durch zwei Horizontalstriche abgebildet (letzteres im Block 270): Aus dem Block 270 gibt es wieder einen Übergang zum Block 266 und weiter zum Block 206 in Fig. 5.

Durch die Betätigung der Korrekturtaste kann die bereits eingetastete Zeit auf Null zurückgestellt werden. Dabei tritt in Fig. 7 ein Übergang vom Block 255 zum Block 202 in der Vorbereitungsroutine auf: Alle Register werden in ihren Anfangszustand zurückgestellt. Wenn keine Korrektur erforderlich ist, kann an zweiter oder dritter Stelle die Starttaste gedrückt werden. Dabei erfolgt in Fig. 7 ein Übergang vom Block 216 zum Block 224: Die Routine der Startbedingung. Zunächst wird im Block 272 geprüft, ob das Freigabebit zum Starten den Wert 1 hat. Es war im Block 264 auf «1» eingestellt. Wenn es jedoch nicht auf «1» eingestellt war, erfolgt eine Rückkehr zum Block 206 in Fig. 5. Wenn das Freigabebit auf «1» eingestellt war, wird das Startbit auf «1» im Block 274 eingestellt. Im Block 276 wird geprüft, ob das Bit «Wiederholung möglich» (2. Bit der Wortstelle Y10) den Wert 0 oder 1 hat. Er war im Block 260 auf Null eingestellt. Wenn es das erste Mal ist, wird dieses Bit also jetzt auf «1» eingestellt und gibt damit an, dass eine Wiederholung möglich ist (Block 278). Wenn es «1» war, wird es dagegen im Block 280 zurückgestellt: Wiederholung nicht mehr möglich. Der Ausgang der Blöcke 278 und 280 geht zum Block 206 in Fig. 4. Durch dieses Bit «Wiederholung möglich» können nacheinander zwei gleich lange Bestrahlungen aktiviert werden, ohne dass die Zeitprogrammierung beim zweiten Mal erneut eingestellt zu werden braucht. Beim Einschalten und bei der Änderung der eingestellten Dauer wird dieses Bit immer (im Block 260) auf Null gestellt. Die erwähnte Wiederholung kann also unterbleiben.

So ist jetzt das Startbit gesetzt. Wie bereits früher erwähnt, kann es in den Blöcken 230, 238 und 246 in Fig. 5 und 6 geprüft werden. Zunächst kann jetzt im Block 238 zum Block 281 verzweigt werden. Hierin wird geprüft, ob die Zeit von 15 Sekunden, die im Block 240 erzeugt wurde, bereits vergangen ist (diese Zeit wird im Block 222 zurückgezählt). Wenn das Startbit noch nicht auf «1» eingestellt ist, wird diese Zeit bei jedem Durchgang vom Block 240 erneut eingestellt. Wenn die erwähnten 15 Sekunden noch nicht vorüber sind, folgt ein Übergang vom Block 281 zum Block 282. Darin wird detektiert, ob der Zeitwert in Sekunden (im Wort Y3) gerade oder ungerade ist. Ist die Zeit gerade, wird das Anzeigeaustastbit auf «1» und bei ungerader Zeit auf Null gesetzt. Es folgt dann wieder der Übergang zum Block 210: Die Anzeigeroutine: Jetzt ist im Block 210 das Anzeigeaustastbit «0» oder «1», so dass entweder der Block 244 (dabei wird die Anzeige unterdrückt) oder der Block 284 durchlaufen wird. Im Block 284 werden die Ziffern im Minutenabschnitt des Registers des Zeitanzeigers zur Anzeigeanordnung geführt. So blinkt die Anzeige also 15 Sekunden. Wenn die 15 Sekunden vorüber sind (Prüfung im Block 281), wird im Block 286 das Bit «Wartezeit vorüber» gesetzt. Im übrigen wird immer die über den Ausgang «5» geschlossene Schleife durchlaufen. Dabei wird der sichere Zustand der Schalter (Block 248) nicht mehr geprüft, sondern wird aus Sicherheitsgründen im Block 252 das Notizregister für die Zeitanzeige geprüft. Wenn der Inhalt mehr als 40 Minuten anzeigt, werden alle Register in der Vorbereitungsroutine in die Anfangsstellung zurückgestellt. Durch den Multiplexvorgang im Block 284 sind jeweils zwei Schleifen für die Anzeige der ganzen Zahl zu durchlaufen.

Das bereits erwähnte Rückwärtszählen erfolgt im Block 222. Weiter ist im Block 230 das Startbit für den Zeitanzeiger jetzt «1» und hat eine 50%-Möglichkeit, dass auch die Netzspannung 50 Hz in der positiven Phase ist. Wenn letzteres der Fall ist, folgt ein Übergang vom Block 230 zum Block 288. Hier wird detektiert, ob ein «erstes-Mal»-Bit (drittes Bit des Worts Y10) den Wert «0» hat. Wenn es den Wert «0» hat, folgt ein Übergang zum Block 290. Im Block 290 wird der Inhalt des Zählregisters (Wortstellen Y0 ... Y6) mit 1/50 Sekunde rückwärtsgezählt. Ausserdem wird im Block 290 das erwähnte «erstes-Mal»-Bit auf 1 gesetzt. Das Rückstellen (auf «0») dieses «erstes-Mal»-Bit erfolgt im Block 232. Im Block 291 wird detektiert, ob die Zählregister einwandfrei arbeiten. Dies geschieht wie folgt: Zunächst wird der Zählerstand aus dem Speicher ausgelesen, auf den Akkumulator des Mikroprozessors übertragen und um 1 dekrementiert (also 1/50 Sekunde). Anschliessend wird dieser Stand wieder in den Speicher eingeschrieben. Schliesslich wird geprüft, ob der Saldo im Akkumulator gleich dem erneut in den Speicher eingeschriebenen Saldo ist. Ist dies nicht der Fall, folgt ein Übergang zum Block 293, in dem das Sicherheitsbit wieder eingestellt wird. Wie bereits erwähnt, erfolgt seine Prüfung im Block 284. Auf diese Weise ist der Notizprozess geprüft. Wenn die Prüfung «gut» ist, wird im Block 292 geprüft, ob der Minutenwert des Zeitanzeigers «0» ist. Wenn dies nicht so ist, folgt ein Ausgang zum Block 294. Im Block 294 wird auf folgende Bedingungen geprüft:

a. hat das Startwort (Wort Y9) den entsprechenden Wert (also «1001»)

b. hat das Bit «Wartezeit vorüber» den Wert 1 (im Block 286 gesetzt).

Wenn die Prüfung «falsch» ist, folgt ein Übergang zum Block 236: Ausgang R9, und damit werden die Schalter 24 und 26 nicht mehr von der bereits erwähnten 1-kHz-Impulsfolge erregt. Wenn sie bisher erregt wurden, wird diese Erregung beendet. Wenn die Prüfung im Block 294 «gut» ergibt, folgt ein Übergang zum Block 296: Der Ausgang R9 wird erregt, und die Bestrahlung setzt ein. Wenn im Block 292 der Zeitzeiger den Wert «0 Minuten» angibt, bedeutet dies, dass die Bestrahlungszeit abgelaufen ist (denn früher waren 60 Sekunden dazu gezählt). Dabei folgt ein Übergang zum Block 298: Darin werden die Bits: Startbit für den Zeitanzeiger- das Freigabebit für den Start sowie das Bit «Wartezeit vorüber» auf «0» gestellt, und die Bestrahlung ist beendet: Der Ausgang R9 wird dabei nicht länger nach dem nächsten Durchgang durch den Block 206 erregt. Es folgt darauf wieder ein Übergang zum Block 220 in Fig. 7: Laderoutine für den Zeitanzeiger. Zunächst wird im Block 300 geprüft, ob das Bit «Wiederholung möglich» den Wert «gut» hat. Wenn dies so ist, wird im Block 302 das Freigabebit für den Start erneut gesetzt. Es folgt darauf ein Übergang zum Block 266. Wenn das erwähnte Freigabebit den Wert «falsch» hat, wird im Block 270 die Zeiteinstellung mit der Anzeigeaustastung wie beim Ausgang des Blocks 202 auf Null zurückgestellt. Im Block 266 wird dann der Minutenabschnitt des Registers (Werte Y5, Y6 in der Bank X1) auf Null zurückgestellt. So ist die Anfangsbedingung wiederhergestellt. Das Wort Y0 der Bank X0 dient noch als Zählerregister, um anzugeben, welcher der R-Ausgänge zuletzt zum Abtasten erregt wurde.

Nach dem beschriebenen Ausführungsbeispiel enthält das Programm nur eine Teilroutine, in der der Mehrbitcode geprüft wird. Das Programm kann in vielen Schleifen durchlaufen werden, die alle die Teilroutine gemeinsam haben. Es ist weiter möglich, bei gar nicht zusammenfallenden Schleifen eine derartige Prüfroutine an mehreren Stellen gegebenenfalls unter Benutzung des gleichen Mehrbitcodes zu verwenden.

## Patentansprüche

1. Dienstleistungsanordnung für den allgemeinen Gebrauch mit

a) einem Anschluss (402) mit einem lösbaren Kontaktelement (404) für eine elektrische Speisequelle, mit einem Verteilerelement (408) zum Abgreifen einer ersten und einer zweiten Speisespannung an der elektrischen Speisequelle,

b) einer Steuerschaltung (422) mit einem ersten Eingang (420) zum Empfang der ersten Speisespannung, einem zweiten Eingang (424) zum Empfang eines spezifischen Steuersignals und einem ersten Ausgang (425) für ein gesteuertes Einschaltsignal,

c) einem Dienstleistungselement (426) mit einem Eingang zum Empfang des Einschaltsignals,

d) einer digital arbeitenden Programmsteueranordnung (412) mit einem nicht flüchtigen Speicherabschnitt, der an ersten Speicherstellen ein Steuerprogramm für das Dienstleistungselement enthält und weiter mit einem flüchtigen Speicherabschnitt (X0 ... X3) für variable Daten, einem ersten Eingang (410) zum Empfang der zweiten Speisespannung direkt aus dem genannten Verteilerelement (408), einem zweiten Eingang für ein Spezifikationssignal für das Dienstleistungselement und einem Ausgang für das spezifische Steuersignal,

e) extern aktivierbaren Mittel (414, 416, 418) zur Bildung des Spezifikationssignals,
dadurch gekennzeichnet, dass zum Sichern der ordnungsgemässen Arbeitsweise der Anordnung bei Direktkontaktierung des genannten lösbaren Kontaktelements (404) und dem dadurch gebildeten undefinierten Beginn der Programmsteuerung ein automatischer Rückstellmechanismus vorgesehen ist, dadurch, dass die Programmsteueranordnung programmiert ist um abhängig vom Ablauf des Einschaltens

f) entweder zuerst eine Vorbereitungsroutine (432) auszuführen, wobei ein vorbestimmter, nicht als Steuersignal arbeitender Mehrbitcode bedingungslos erzeugt (430) und an einer vorgegebenen Adresse des flüchtigen Speicherabschnitts gespeichert wird, wodurch eine Anfangsbedingung für eine durch externe Aktivierung startbare Arbeitsroutine (434) gebildet wird (432), oder

g) gleich diese Arbeitsroutine (434) zum Bilden des spezifischen Steuersignals zur Erzeugung des Einschaltsignals auszuführen, welche Arbeitsroutine an wenigstens einer Stelle einen Test auf wenigstens ein Bit des Mehrbitcodes ausführt, wobei bei negativem Ergebnis des Tests zunächst die Vorbereitungsroutine (432) ausgeführt (440) und dann der Arbeitsroutine (434) vorbereitet wird.

2. Dienstleistungsanordnung nach Anspruch 1, dadurch gekennzeichnet, dass die Arbeitsroutine (434) eine einzige Schleife enthält in der sich die genannte Stelle als einzige Teststelle befindet.

3. Dienstleistungsanordnung nach Anspruch 1, dadurch gekennzeichnet, dass die Arbeitsroutine (434) wenigstens eine, wiederholt ausführbare Schleife enthält in der sich die genannte Stelle befindet, dass der Mehrbitcode eine Reihe von Mehrbitelementen enthält und dass ein Anzeiger (Fig. 8: X1, 0) vorgesehen ist, der nach jedem Passieren der genannten Stelle auf ein nächstes Mehrbitelement der Reihe gestellt wird und dass bei jedem Test ausschliesslich das angezeigte Mehrbitelement getestet wird.

4. Dienstleistungsanordnung nach Anspruch 1, 2 oder 3, dadurch gekennzeichnet, dass eine Anzahl weiterer Speicherstellen des nicht flüchtigen Abschnitts Information zum Anzeigen des genannten Anfangs der Vorbereitungsroutine enthält.

5. Dienstleistungsanordnung nach Anspruch 4, dadurch gekennzeichnet, dass jede getrennt adressierbare weitere Speicherstelle des nicht flüchtigen Speicherabschnitts die genannte Anzeigeinformation enthält.

## Claims

1. A service apparatus for general use which includes

a) a connection (402) with a detachable contact member (404) for an electrical power supply source, a distribution member (408) for deriving a first and a second supply voltage from the electrical power supply source,

b) a control circuit (422) which includes a first input (420) for receiving the first supply voltage, a second input (424) for receiving a specific control signal, and a first output (425) for a controlled switch-on signal,

c) a service member (426) which includes an input for receiving the switch-on signal,

d) a digital program control device (412) which includes a non-volatile memory section which contains a control program for the service member in first memory locations and which also includes a volatile memory section (X0 ... X3) for variable data, a first input (410) for receiving the second supply voltage directly from said distribution member (408), a second input for a specification signal for the service member, and an output for the specific signal,

e) externally activatable means (414, 416, 418) for forming the specification signal,
characterized in that there is provided an automatic reset mechanism in order to ensure correct operation of the apparatus upon direct contacting of said detachable contact member (404) and the resultant undefined beginning of program control, the program control device being programmed to execute, depending on the switch-on procedure, either:

f) first a preparation routine (432) wherein a predetermined multi-bit code which does not act as a control signal is unconditionally generated (430) and stored at a predetermined address of the volatile memory section, thus forming (432) a starting condition for an operative routine (434) which can be started by external activation, or

g) this operative routine (434) immediately for forming the specific control signal for generating the switch-on signal, said operative routine performing a test on at least one bit of the multi-bit code in one location, in the case of a negative test result first the preparation routine (432) being performed (440) after which the operative routine (434) is prepared.

2. A service apparatus as claimed in Claim 1, characterized in that the operative routine (434) comprises a single loop in which said location is situated as the sole test location.

3. A service apparatus as claimed in Claim 1, characterized in that the operative routine (434) comprises at least one loop which can be executed repeatedly and in which said location is situated, the multi-bit code containing a series of multi-bit elements, there being provided a pointer (Fig. 8: X1, 0) which is set to the next multi-bit element of the series upon each passage of said location, exclusively the indicated multi-bit element being tested during each test.

4. A service apparatus as claimed in Claim 1, 2 or 3, characterized in that a number of further memory locations of the non-volatile section contain information for indicating the beginning of said preparation routine.

5. A service apparatus as claimed in Claim 4, characterized in that each separately addressable further memory location of the non-volatile memory section contains a pointer information.

**Revendications**

1. Dispositif de prestation de service à usage général comportant:

a) une borne (402) avec un élément de contact détachable (404) pour une source d'alimentation électrique, un élément répartiteur (408) pour la prise d'une première et d'une seconde tension d'alimentation sur la source d'alimentation électrique,

b) un circuit de commande (402) avec une première entrée (420) pour recevoir la première tension d'alimentation, une deuxième entrée (424) pour recevoir un signal de commande spécifique et une première sortie (425) pour un signal d'enclenchement commandé,

c) un élément de prestation de service (426) avec une entrée pour recevoir le signal d'enclenchement,

d) un dispositif de commande de programme à fonctionnement numérique (412) avec une section de mémoire non volatile qui, dans des premiers emplacements de stockage, contient un programme de commande pour l'élément de prestation de service et en outre avec une section de mémoire volatile (X0 ... X3) pour des données variables, une première entrée (410) pour recevoir la deuxième tension d'alimentation directement à partir du dit élément répartiteur (408), une seconde entrée pour un signal de spécification pour l'élément de prestation de service et une sortie pour le signal de commande spécifique,

e) des moyens pouvant être activés de l'extérieur (414, 416, 418) pour former le signal de spécification,

caractérisé en ce que pour protéger le mode de travail convenable du dispositif dans le cas d'une mise en contact directe du dit élément de contact détachable (404) et du début de ce fait indéfini de la commande de programme, un mécanisme de retour à l'état initial automatique est prévu par le fait que le dispositif de commande de programme est programmé pour, en fonction du déroulement de l'enclenchement,

f) soit exécuter tout d'abord un sous-programme de préparation (432) suivant lequel un code multibit prédéterminé n'agissant pas comme signal de commande est produit sans condition (430) et est stocké à une adresse préétablie de la section de mémoire volatile, de sorte qu'une condition initiale pour un sous-programme de travail (434) pouvant être démarré par activation externe est formée (432),

g) soit exécuter tout de suite ce sous-programme de travail (434) pour former le signal de commande spécifique en vue de produire le signal d'enclenchement, ce sous-programme de travail effectuant en au moins un endroit un essai portant sur au moins un bit du code multibit, étant entendu que dans le cas d'un résultat négatif de l'essai, le sous-programme de préparation (432) est tout d'abord exécuté (440) et le sous-programme de travail (434) est ensuite préparé.

2. Dispositif de prestation de service suivant la revendication 1, caractérisé en ce que le sous-programme de travail (434) comprend une seule boucle dans laquelle le dit endroit se trouve comme seul endroit d'essai.

3. Dispositif de prestation de service suivant la revendication 1, caractérisé en ce que le sous-programme de travail (434) comprend au moins une boucle pouvant être exécutée de manière répétée et dans laquelle se trouve le dit endroit, auquel cas le code multibit comprend une série d'éléments multibits et il est prévu un dispositif d'affichage (Fig. 8: X1, 0) qui après chaque passage du dit endroit, est réglé sur un élément multibit suivant de la série et, seul l'élément multibit affiché étant éprouvé à chaque essai.

4. Dispositif de prestation de service suivant la revendication 1, 2 ou 3, caractérisé en ce qu'un certain nombre d'autres endroits de stockage de la section non volatile contiennent de l'information pour afficher le début précité du sous-programme de préparation.

5. Dispositif de prestation de service suivant la revendication 4, caractérisé en ce que chaque autre endroit de stockage adressable séparément de la section de mémoire non volatile contient l'information d'affichage précitée.

FIG.1

FIG.3

FIG.2

FIG.4

**FIG.5**

FIG.6

FIG.7

| | X0 | | | | X1 | | | | X2 | | | | X3 | | | |
|----|---|---|---|---|---|---|---|---|---|---|---|---|---|---|---|---|
| 0 | | | | | P | P | P | P | 0 | 1 | 1 | 0 | 0 | 0 | 0 | 0 |
| 1 | | | | | | | | | 0 | 1 | 1 | 1 | 0 | 0 | 0 | 0 |
| 2 | | | | | | | | | 1 | 0 | 0 | 0 | 0 | 0 | 0 | 0 |
| 3 | | | | | | | | | 1 | 0 | 0 | 1 | 0 | 0 | 0 | 0 |
| 4 | | | | | | | | | 1 | 0 | 1 | 0 | 0 | 0 | 0 | 0 |
| 5 | | | | | | | | | 1 | 0 | 1 | 1 | 0 | 0 | 0 | 0 |
| 6 | | | | | | | | | 1 | 1 | 0 | 0 | 0 | 0 | 0 | 0 |
| 7 | | | | | | | | | 1 | 1 | 0 | 1 | 0 | 0 | 0 | 0 |
| 8 | | | | | | | | | 1 | 1 | 1 | 0 | 0 | 0 | 0 | 0 |
| 9 | | | | | | | | | 1 | 1 | 1 | 1 | 0 | 0 | 0 | 0 |
| 10 | | | | | | | | | 0 | 0 | 0 | 0 | 0 | 0 | 0 | 0 |
| 11 | | | | | | | | | 0 | 0 | 0 | 1 | 0 | 0 | 0 | 0 |
| 12 | | | | | | | | | 0 | 0 | 1 | 0 | 0 | 0 | 0 | 0 |
| 13 | | | | | | | | | 0 | 0 | 1 | 1 | 0 | 0 | 0 | 0 |
| 14 | | | | | | | | | 0 | 1 | 0 | 0 | 0 | 0 | 0 | 0 |
| 15 | | | | | | | | | 0 | 1 | 0 | 1 | 0 | 0 | 0 | 0 |

# FIG.8